# EUROPÄISCHE PATENTSCHRIFT

(11) **EP 3 470 196 B1**
(45) Veröffentlichungstag und Bekanntmachung des Hinweises auf die Patenterteilung: **16.09.2020**
(21) Anmeldenummer: 17196681.5
(22) Anmeldetag: 16.10.2017
(51) Int. Cl.: B29B 15/12

(54) **EINRICHTUNG UND VERFAHREN ZUR IMPRÄGNIERUNG VON FASERBÜNDELN MIT EINER POLYMERSCHMELZE**
DEVICE AND METHOD FOR THE IMPREGNATION OF FIBRE BUNDLES WITH A POLYMER MELT
DISPOSITIF ET PROCÉDÉ D'IMPRÉGNATION DE FAISCEAUX DE FIBRES AU MOYEN D'UN POLYMÈRE FONDU

(43) Veröffentlichungstag der Anmeldung: 17.04.2019
(73) Patentinhaber: Feddem GmbH & Co. KG, 53489 Sinzig (DE)
(72) Erfinder: Groß, Dieter, 64319 Pfungstadt (DE); Jost, Sebastian, 56653 Wehr (DE)
(74) Vertreter: Meyer, Ludgerus

(56) Entgegenhaltungen:
- EP-A1- 0 783 957
- EP-B1- 2 701 886
- WO-A1-2009/045190

## Beschreibung

Die Erfindung bezieht sich auf eine Einrichtung zur Imprägnierung von Faserbündeln mit einer Polymerschmelze nach dem Oberbegriff des Anspruchs 1 sowie ein Verfahren nach dem Oberbegriff des Anspruchs 11.

In vielen Industriebereichen werden Kunststoffmaterialen eingesetzt, die für Leichtbauelemente und andere Formteile verwendet werden, denen zur Gewichtseinsparung bei gleichzeitig hoher Festigkeit Fasermaterialen aus Glas- oder Kohlenstoff hinzugefügt sind. Solche Materialien werden u.a. vielfach in der Automobilindustrie und im Flugzeugbau eingesetzt.

Zur Verstärkung von langgestreckten Baumaterialen, wie Rohren, Kabeln, Schläuchen etc. werden auch langgestreckte Fasermaterialien verwendet, die in Kunststoffe eingebettet sind und den Baumaterialen insbesondere eine Längsfestigkeit verleihen. Bereits ein geringer Faseranteil in den Kunststoffen führt zu beträchtlicher Festigkeitserhöhung.

Die Herstellung von faserverstärkten Kunststoffteilen erfolgt in der Regel über Spritzguss-, Fließpress-, Tiefzieh- oder Stranggussanlagen, denen die mit Fasern versetzten Kunststoffgranulate /-Pellets oder Kunststoffbändchen/ -Tapes zugeführt werden.

Für derartige Zwecke produzierte Granulate oder Bändchen werden üblicherweise dadurch hergestellt, dass von einem Vorrat abgezogene Endlosfasern in Form von sogenannten Rovings als Bündel feinster Fasern aus Glas, Kohlenstoff oder anderen Materialien, wie z. B. Aramid, zunächst über eine Spanneinrichtung ausgebreitet werden, dann mit einer Kunststoffschmelze durchtränkt, danach kalibriert und gekühlt werden und schließlich in Granulate von 3 - 50 mm Länge geteilt werden, oder als Endlosband aufgewickelt werden. Diese Granulate oder Bändchen werden dann an Kunststoff-Verarbeiter geliefert, die aus diesen Ausgangsstoffen Bauelemente unterschiedlicher Art herstellen.

Ein kritischer Schritt im Verfahrensablauf ist die Imprägnierung der Faserbündel mit Kunststoff. Es ist bekannt, die ausgebreiteten Faserbündel unter Spannung durch einen Durchlass zwischen zwei Führungsplatten hindurchzuführen, die korrespondierende wellenförmige Oberflächen enthalten, wobei die Faserbündel am Durchlasseingang von ober- oder unterseitig zugeführter Polymerschmelze durchdrungen werden. Im weiteren Durchlauf zwischen den Führungsplatten verbessert sich aufgrund eines mehrfachen Umlenkens und Kontaktierens der Faserbündel an Wellen _{[GD1]} der Führungsplatten die Durchdringung mit der Polymerschmelze.

Aus der EP 2701886 B1 ist ein entsprechendes Werkzeug zum Imprägnieren eines Faserrovings mit einem Polymerharz bekannt, bei dem der Zufuhrkanal zum Durchlass eine besondere Ausbildung des Querschnitts aufweist, um eine gleichmäßige Zuführung von Polymerschmelze zum Durchlass zwischen den Führungsplatten zu erziehen.

Die EP 2517854B1 betrifft einen Teilaspekt des Werkzeugs, der sich mit dem Ort des Eintritts der Polymerschmelze in den Durchlass befasst. Dort wird eine Imprägniereinheit angegeben, bei der der Einlass für die Faserbündel in den Durchlass zwischen den Führungsplatten so gestaltet ist, dass der Roving vor Eintritt in den Durchlass so angehoben wird, dass ein Spalt zwischen dem Auslass der Polymerschmelze und dem bandförmigen Roving minimiert ist. Damit trifft die von der Oberseite zugeführte Polymerschmelze bei ihrem Auslass aus dem Zufuhrkanal unmittelbar auf den Roving und kann ihn unmittelbar durchdringen.

In der US 5,277,566 ist ein Imprägnierwerkzeug angegeben, bei dem die Polymerschmelze in einem ersten Wellental der unteren Führungsplatte zugeführt wird. Der Roving verläuft an dieser Stelle im mittleren Bereich des Durchlasses.

Dokument EP 2 701 886 offenbart eine Einrichtung zur Imprägnierung von strangförmigen Faserbündeln mit einer Polymerschmelze, bei der parallel zueinander in einen spaltförmigen Einlauf einer Imprägniereinheit eingeführte Faserbündel zwischen zwei mit definiertem Abstand komplementär zueinander angeordnete Führungsplatten mit wellenförmigen Oberflächen hindurchgeführt und über einen Auslauf aus der Imprägniereinheit ausgegeben werden, wobei die Faserbündel während Ihres Durchlaufs durch die Imprägniereinheit mit der Polymerschmelze durchtränkt werden, welche im Anschluss an den spaltförmigen Einlauf in den Durchlass zwischen den Führungsplatten eingeführt wird (Abbildungen 1,4,5,15). Dieses Dokument offenbart eine einzige Imprägniereinheit mit einer einzigen Polymereinlass.

Dokument WO 2009/045190 beschreibt hinsichtlich des Merkmals "wenigstens zwei Durchlässe" dieselben Vorteile wie die vorliegende Anmeldung. Dieses Dokument offenbart nicht zwei gekoppelte Imprägniereinheiten, die jeweils einen spaltenförmigen Einlauf sowie jeweils einen Einlass für Polymerschmelze aufweisen.

Die gleichmäßige Zufuhr von Kunststoffschmelze über die gesamte Breite der Imprägniereinheit ist kritisch. Insbesondere bei einer großen Zahl gleichzeitig zu bearbeitender Faserbündel ist es nur schwer möglich, die Druckverhältnisse, die Temperatur und die Fließgeschwindigkeit der Schmelze über die gesamte Breite des Durchlasses bzw. des Einlassbereichs für Schmelze in den Durchlass genügend genau einzustellen oder zu steuern.

Der Erfindung liegt daher die Aufgabe zugrunde, eine verbesserte Einrichtung zur Imprägnierung von Faserbündeln mit einer Polymerschmelze anzugeben, bei der die Homogenität der Durchdringung der Faserbündel verbessert ist, die Einrichtung einfach an unterschiedliche Bedarfe angepasst werden kann und auch in der Lage ist, mit einer Anlagengestaltung unterschiedliche Kunststoffmaterialen zu verarbeiten.

Diese Aufgabe wird durch die in den Ansprüchen angegebene Erfindung gelöst. Vorteilhafte Weiterbildungen der Erfindung sind in Unteransprüchen angegeben.

Die Erfindung geht aus von einer Einrichtung zur Imprägnierung von Faserbündeln mit einer Polymerschmelze, bei der die parallel zueinander in einen spaltförmigen Einlauf einer Imprägniereinheit eingeführten Faserbündel zwischen zwei mit definiertem Abstand komplementär zueinander angeordnete Führungsplatten mit wellenförmigen Oberflächen hindurchgeführt werden. Die Faserbündel werden während Ihres Durchlaufs durch die Imprägniereinheit mit der Polymerschmelze durchtränkt, welche im Anschluss an den spaltförmigen Einlauf in den Durchlass zwischen den Führungsplatten eingeführt wird.

Nach der Erfindung weist die Imprägniereinheit wenigstens zwei Durchlässe für jeweils eine definierte Anzahl von Faserbündeln auf, wobei die Durchlässe jeweils einen Einlass für Polymerschmelze aufweisen.

Nach der Erfindung besteht die Imprägniereinheit daher aus wenigstens zwei parallel angeordneten Teileinheiten, die seitlich aneinander gekoppelt sind und jeweils einen Einlass für Polymerschmelze aufweisen, wobei die Teileinheiten jeweils einen spaltförmigen Einlauf und einen Auslauf für eine definierte Anzahl von Faserbündeln enthalten.

Anstelle einer möglichst großen Imprägniereinheit geht die Erfindung den umgekehrten Weg, indem sie die Imprägniereinheit in kleinere Einheiten unterteilt, denen die Polymerschmelze getrennt voneinander zugeführt wird. Daraus ergibt sich der Vorteil, dass die Einrichtung flexibel an unterschiedliche Bedarfe angepasst werden kann, wobei gleichzeitig eine vollständige Kontrolle der Parameter der Einrichtung gewährleistet bleibt. Diese Teilung ermöglicht es auch, an der Anlage in jeder Teileinheit unterschiedliche Parameter zu fahren, beispielsweise mit verschiedenen Kunststoffmaterialien oder Füllgraden.

Bei geringer Auslastung der Anlage kann eine Teileinheit auch deaktiviert werden oder sogar problemlos abgeflanscht werden. Umgekehrt können bei größerem Bedarf zusätzliche Einheiten dazu geschaltet werden. Es ergibt sich damit eine hohe Flexibilität der Anlage und auch eine Einsparung an Energie und Kosten.

Zur weiteren Verbesserung der Imprägnierqualität sieht die Erfindung vorzugsweise vor, den Einlauf für die Faserbündel mit einem Bereich reduzierter Spalthöhe zu versehen, der die Faserbündel vor Eintritt in den Durchlass der Imprägniereinheit so umgelenkt, dass eine erhöhte Zugkraft auf die durch die Imprägniereinheit laufenden Faserbündel ausgeübt werden kann.

Der Einlass der Polymerschmelze in den Durchlass zwischen den Führungsplatten befindet sich in bevorzugter Ausgestaltung der Erfindung zwischen einem Tal und einem Berg der Wellen der Führungsplatten, wobei die Durchlasshöhe zwischen den Führungsplatten im Einlassbereich der Polymerschmelze maximiert ist. Damit lässt sich eine verbesserte Temperatursteuerung der zugeführten Schmelze mit verbesserter definierter Durchdringung und Tränkung der Faserbündel herstellen. Zudem wird über eine Verjüngung am Polymereinlass der Schmelze eine Stromabwärtsrichtung auferlegt, die der besseren Füllung der Imprägnierzone dient.

Die Teileinheiten der Imprägniereinheit sind insbesondere aus einer Haupteinheit, die die Führungsplatten enthält, Seitenteilen, einer Frontplatte und einem stromabwärtigen Düsenplatte gebildet. Der Einlauf der Faserbündel befindet sich vorzugsweise zwischen der Oberseite der Frontplatte und einem vorderseitigen Ansatz der oberen Führungsplatte. Wenn mehrere Teileinheiten unmittelbar aneinander gekoppelt sind, ist zwischen zwei Teileinheiten jeweils nur ein gemeinsames Seitenteil erforderlich oder die Teileinheiten können in einer weiteren Ausgestaltung auch unmittelbar ohne gemeinsames Seitenteil gekoppelt werden.

Der jeweilige Zufuhrkanal zur Zuführung der Polymerschmelze befindet sich zwischen der Stirnseite des Hauptteils und der Frontplatte. Hier ist auch ein Verteilerbereich zur Verteilung der Polymerschmelze über die gesamte Breite einer Teileinheit ausgebildet. Die Ausbildung von Teileinheiten vereinfacht die Verteilung der Polymerschmelze daher in erheblichem Umfang.

Vorzugsweise kann jede Teileinheit eine Zahl von 3 - 70, vorzugsweise 10 - 30 Faserbündeln verarbeiten.

Das erfindungsgemäße Verfahren sieht vorzugsweise vor, dass die Faserbündel vor ihrem Einlauf in die Imprägniereinheit in wenigstens zwei oder mehr Faserbündelgruppen aufgeteilt werden, die getrennt voneinander in jeweils eine Teileinheit eingeführt werden.

In jeder Teileinheit können die Zugspannungen, Durchlaufgeschwindigkeiten Temperaturen und Drücke bei Bedarf variabel eingestellt oder geregelt werden.

Den Teileinheiten können auch Polymerschmelzen unterschiedlichen Materials zugeführt werden.

Schließlich können die Führungsplatten auch in eine schwingende, insbesondere niedrigfrequente sinusförmige Bewegung gebracht werden, um die Durchdringung der Fasern mit Polymerschmelze weiter zu verbessern.

Die Erfindung wird nachstehend anhand eines Ausführungsbeispiels näher erläutert. Es zeigen:
- Fig. 1: eine Übersichtsansicht einer Anlage zur Herstellung von mit Fasermaterial versetzten KunststoffGranulate in Seitenansicht,
- Fig. 2: eine Anlage von Fig. 1 in Aufsicht,
- Fig. 3: eine Imprägniereinheit, bestehend aus zwei Teileinheiten,

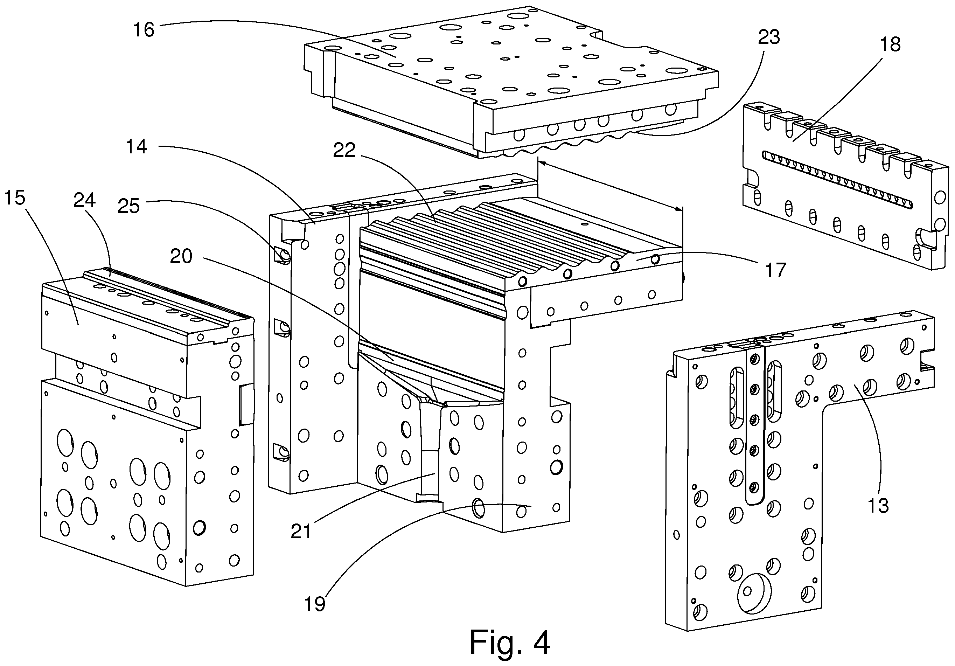

- Fig. 4: eine Explosionsansicht der Einzelteile einer Teileinheit,
- Fig. 5: eine Voransicht der Frontplatte einer Teileinheit,
- Fig. 6: eine Schnittansicht durch eine Teileinheit,
- Fig. 7: eine Vorderansicht des Hauptteils,
- Fig. 8: eine Ansicht der Anordnung der Führungsplatten, und
- Fig. 9: eine Detailansicht des Einlasses für Polymerschmelze in den Durchlass zwischen den Führungsplatten

Die erfindungsgemäße Einrichtung ist in der Lage, Faserbündel unterschiedlicher Art mit Polymermaterial zu imprägnieren. Unter Fasern ist jede Art von Fasern zu verstehen, die eine hohe Längsfestigkeit, wie Glasfasern, Carbonfasern, Feindrähte, Textilfäden, Aradmidfasern oder ähnliche Produkte aufweisen. Als zur Imprägnierung geeignetes Polymermaterial sind insbesondere PA, PP, PE und andere thermoplastische Kunststoffe zu nennen, die zur Ummantelung und Imprägnierung von Fasermaterialien geeignet sind. Thermoplastische Kunststoffe sind jedoch schwer mit Fasermaterialen zu verbinden, so dass eine intensive Durchdringung der Fasermaterialien in einer Imprägniereinheit erforderlich ist.

Ein Roving ist eine Bündelung einer Vielzahl der vorgenannten Fasern zu einem Strang, der hier im Wesentlichen als Faserbündel bezeichnet wird. Die Zahl der Fasern in einem Strang kann bis zu mehrere Tausend betragen und ein Roving kann mehrere Kilometer lang sein. Er ist üblicherweise auf einer Rolle aufgerollt.

Nach der Imprägnierung und Umhüllung eines Rovings wird der erzeugte Strang in kurze Stücke zerteilt und als Granulat Kunststoff-Verarbeitern zur Weiterverarbeitung zur Verfügung gestellt. Diese können aus dem Granulat hochfeste und leichte Produkte herstellen, wie Rohre und andere Formteile. Im Falle der Bandherstellung werden die imprägnierten Rovings als Endlosband aufgewickelt.

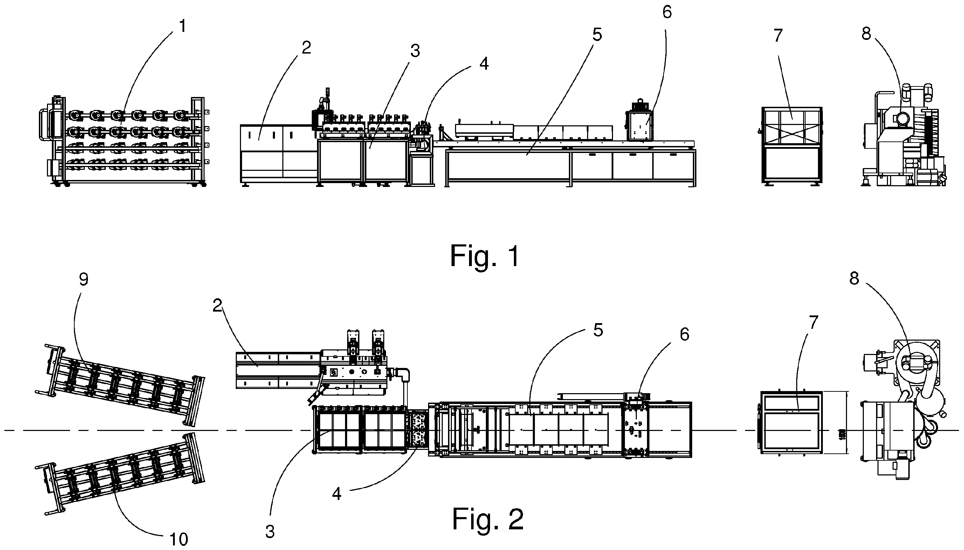

In Figur 1 ist eine Anlage zur Herstellung von Granulaten in Seitenansicht dargestellt. Ein Spulengatter 1 enthält in einem Gestell eine größere Zahl von abrollbaren Faserbündeln, die etwa schnurförmig auf Rollen des Spulengatters 1 aufgerollt sind und kontrolliert davon abgerollt werden können. Die einzelnen Faserbündel werden dann in eine Spanneinheit 3 eingeführt, in der sie parallel nebeneinander angeordnet werden und jeweils durch Aufspannen verbreitert werden.

Von der Spanneinheit werden die Faserbündel in die Imprägniereinheit 4 überführt, in der sie mit Polymerschmelze durchsetzt werden. In einer anschließenden Wasserbadstrecke 5 wird der Verbund aus Fasern und Polymer abgekühlt und am Ende der Wasserbadstrecke über Formrollen 6 in eine zylindrische Form gebracht. Es folgt ein Bandabzug 7, durch den die Längsspannung des Faser- Polymerverbunds in der Anlage aufrechterhalten werden kann. Der Faser- Polymerverbund wird dann einem Granulator 8 zugeführt und in Pellets / Granulat zerteilt.

Figur 2 zeigt eine Aufsicht auf eine Anlage nach Figur 1. Das Spulengatter ist aus zwei nebeneinander im Winkel angeordneten Spulenteilgattern 9 und 10 gebildet, die jeweils eine Anzahl von Spulen aufnehmen. Die daraus abgezogenen Faserbündel laufen in die Vorspanneinheit 3 ein, in der sie aufgespannt und vorgewärmt werden und dann der Imprägniereinheit 4, die aus zwei parallel angeordneten Teileinheiten gebildet ist, zugeführt werden.

Der Imprägniereinheit ist ein Extruder 2 zugeordnet, der die Polymerschmelze zur Imprägnierung der Faserbündel zur Verfügung stellt. Die Faserbündelgruppen werden im weiteren Prozessablauf parallel verarbeitet, können aber auch bei Bedarf unterschiedliche weitere Prozessschritte durchlaufen.

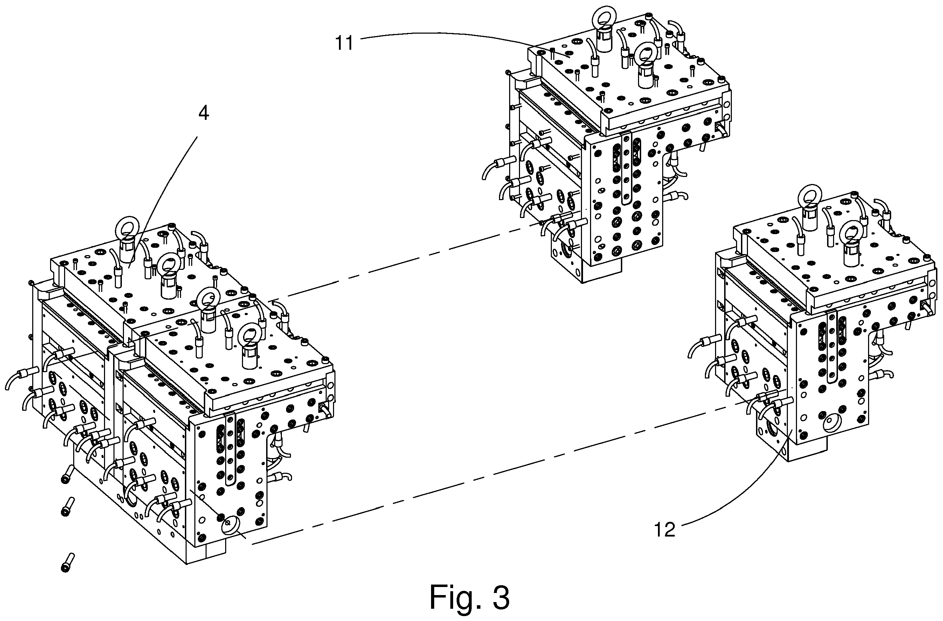

Figur 3 zeigt eine Imprägniereinheit 4, die aus zwei Teileinheiten 11 und 12 zusammengesetzt ist. Die Teileinheiten sind gleichartig aufgebaut und können jeweils eine Gruppe von Faserbündeln behandeln. Die Imprägniereinheit 4 kann auch aus mehr als zwei Teileinheiten gebildet sein. Bei einer jeweils zu bearbeitenden Zahl von 20 Faserbündeln können somit bei drei Teileinheiten 60 Faserbündel gleichzeitig bearbeitet werden. Die Teileinheiten sind vorzugsweise über eine Verschraubung 25 aneinander geflanscht. Sie können jedoch auch unabhängig voneinander sein.

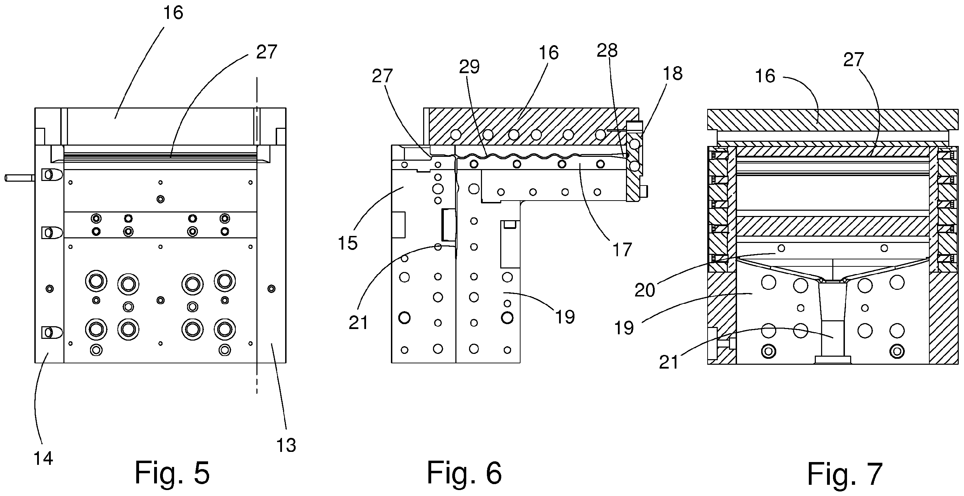

Figur 5 zeigt eine zerlegte Teileinheit. Diese besteht aus einem Hauptteil 19, der an der Oberseite eine untere Führungsplatte 17 trägt. Der Hauptteil ist durch Seitenteile 13 und 14 in Querrichtung begrenzt. An der Stirnseite des Hauptteils (gegen die Einlaufrichtung der Fasern gesehen) befindet sich eine Frontplatte und an der Oberseite des Hauptteils ist eine obere Führungsplatte 16 angeordnet. Am rückwärtigen Ende ist eine Düsenplatte 18 befestigt.

Untere und obere Führungsplatten 16 und 17 weisen bei einem kleinen Abstand zueinander von 0,5 - 8 mm einen Durchlass auf, durch den die Faserbündel hindurchgeführt werden. Die Oberflächen der Führungsplatten 16 und 17 sind komplementär zueinander mit einer wellenförmigen Oberfläche 22 bzw. 23 versehen. An der Stirnseite des Hauptteils 19 ist eine Hälfte des Zufuhrkanals 21 zu sehen, dessen andere Hälfte (nicht dargestellt) an der Rückseite des Frontteils 15 ausgebildet ist. Der Zufuhrkanal 21 mündet nach oben hin in einen Verteilerbereich 20, in dem zugeführte Polymerschmelze in die Breite verteilt wird und somit über die gesamte Breite der Frontseite des Hauptteils verläuft.

Figur 5 zeigt eine Stirnansicht der Frontplatte 15 mit Seitenteilen13 und 14. Die Figur zeigt insbesondere den Einlauf 27, in den die Faserbündel in die Imprägniereinheit eingeführt werden.

Figur 6 zeigt eine Schnittansicht einer Teileinheit mit Hauptteil 19, Frontplatte 15, oberer Führungsplatte 16, unterer Führungsplatte 17 und dem Durchlass 29 zwischen den oberen und unteren Führungsplatten 16 und 17. Über den Einlauf 27 werden die Faserbündel in die Imprägniereinheit eingeführt, laufen unter Längsspannung durch den Durchlass 29, bis sie über den Auslauf 28 aus dem Durchlass 29 austreten und dann durch die anschließende Düsenplatte 18 kalibriert aus der Imprägniereinheit austreten. Die Zufuhr der Polymerschmelze erfolgt von unten über den Zufuhrkanal 21, der an einen Extruder angeschlossen ist.

In Figur 7 ist noch einmal der Verteilerbereich an der Stirnseite des Hauptteils 19 gezeigt, wobei der Verteilerbereich mehrere Verteilungsstege und Umlenkungen enthält, die dafür sorgen, dass die Polymerschmelze gleichmäßig über die volle Breite der Teileinheit verteilt wird.

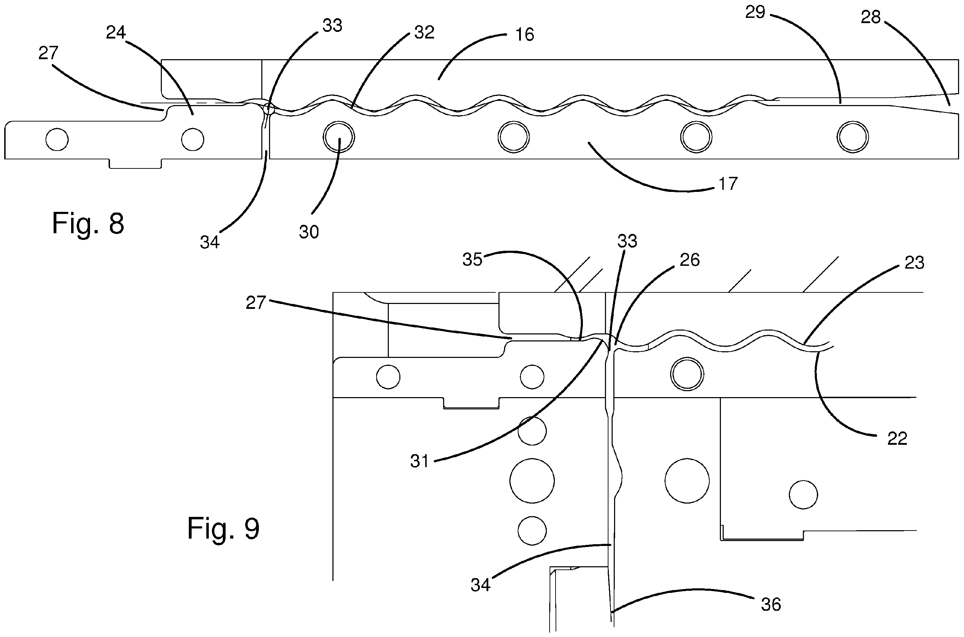

Figur 8 zeigt eine vergrößerte Darstellung der Anordnung der Führungsplatten 16 und 17 zueinander. Die Anordnung der Platten definiert einen Durchlass 29 von 0,5 - 8 mm, durch den das Faserbündel 32 vom Einlauf 27 bis zum Auslauf 28 hindurchgezogen wird. Aufgrund der aufgebrachten Längsspannung auf das Faserbündel kontaktiert das Faserbündel während des Durchlaufs durch den Durchlass an einer Reihe von Stellen die jeweiligen Bergspitzen der wellenförmig geformten Führungsplatten und wird dadurch verbessert von Polymerschmelze durchdrungen. Über eine Heizvorrichtung 30 wird die erforderliche Plastizität der Schmelze beim Durchlauf der Faserbündel aufrechterhalten.

Die Polymerschmelze wird dem Durchlass über den Schmelzekanal 34, der sich über die gesamte Breite der Teileinheit erstreckt, an dem Polymeraustritt 33 zugeführt und tränkt dort das Faserbündel.

Figur 9 zeigt eine weiter vergrößerte Ansicht des Bereichs, in dem die Polymerschmelze an dem Einlass 26 in den Durchlass 29 eintritt. Der Polymeraustritt befindet sich an einem fallenden Schenkel des wellenförmigen Durchlasses 29 zwischen einem Tal und einem Berg und ist in Laufrichtung des Faserbündels angewinkelt, so dass der Umlenkwinkel der Schmelze beim Eintritt in den Durchlass 29 minimiert ist. Zur besseren thermischen Steuerung der Austrittsstelle ist der Durchlass in diesem Bereich etwas vergrößert, um an dieser Stelle eine größere Menge an Schmelze zu konzentrieren. Zudem wird über eine Verjüngung des Schmelzekanals am Polymereinlass der Schmelze eine Stromabwärtsrichtung auferlegt, die der besseren Füllung der Imprägnierzone dient.

In weiterer Ausgestaltung kann der Schmelzekanal über eine einstellbare schienenartige Drosselstelle 36 verengt oder erweitert werden, um den Druck der Polymerschmelze variieren zu können.

Wenn der Einlass 26 in den Durchlass 29 weiter auf einen folgenden ansteigenden Schenkel zwischen einem Tal und einem Berg verschoben wird, kann noch ein flacherer Winkel des Eintritts der Schmelze in den Durchlass erreicht werden. Alternativ zur Darstellung in Fig. 9 kann die Wellenform der Führungsplatten auch vertikal gespiegelt ausgebildet sein, so dass sich der Einlass 26 in den Durchlass 29 bereits auf dem in Laufrichtung der Faserbündel ersten (ansteigenden) Schenkel zwischen einem Tal und Berg befindet.

Durch einen Spannbereich 35 mit verringerter Durchlasshöhe im Anschluss an eine Einlauffläche 24 und anschließender Bogenform 31 am Beginn des wellenförmigen Durchlasses 29 lässt sich die in der Imprägniereinrichtung erforderliche Spannung auf die Faserbündel weiter erhöhen.

Um eine noch weitere Verbesserung der Durchdringung der Polymerschmelze durch die Faserbündel zu erreichen kann die Imprägniereinrichtung auch eine Einrichtung zur Erzeugung einer geringen schwingenden Bewegung wenigstens einer der Führungsplatten enthalten.

**Bezugszeichen**

| | | | |
|---|---|---|---|
| 1 | Spulengatter | 19 | Hauptteil |
| 2 | Extruder | 20 | Verteilerbereich |
| 3 | Vorspanneinheit | 21 | Zufuhrkanal |
| 4 | Imprägniereinheit | 22 | untere Oberfläche |
| 5 | Wasserbad | 23 | obere Oberfläche |
| 6 | Formrollen | 24 | Einlauffläche |
| 7 | Bandabzug | 25 | Verschraubung |
| 8 | Granulator | 26 | Einlass |
| 9 | Spulenteilgatter | 27 | Einlauf |
| 10 | Spulenteilgatter | 28 | Auslauf |
| 11 | Teileinheit | 29 | Durchlass |
| 12 | Teileinheit | 30 | Heizeinrichtung |
| 13 | Seitenplatte | 31 | Bogen |
| 14 | Seitenplatte | 32 | Faserbündel |
| 15 | Frontplatte | 33 | Polymeraustritt |
| 16 | obere Führungsplatte | 34 | Schmelzekanal |
| 17 | untere Führungsplatte | 35 | Spannbereich |
| 18 | Düsenplatte | 36 | Drosselstelle |

## Patentansprüche

1. Einrichtung zur Imprägnierung von strangförmigen Faserbündeln (32) mit einer Polymerschmelze, bei der mehrere parallel zueinander in einen spaltförmigen Einlauf (27) einer Imprägniereinheit (4) eingeführte Faserbündel (32) zwischen zwei mit definiertem Abstand komplementär zueinander angeordnete Führungsplatten (16, 17) mit wellenförmigen Oberflächen (22, 23) hindurchgeführt und über deren Auslauf (28) aus der Imprägniereinheit (4) ausgegeben werden, wobei die Faserbündel (32) während ihres Durchlaufs durch die Imprägniereinheit (4) mit der Polymerschmelze durchtränkt werden, welche im Anschluss an den spaltförmigen Einlauf (27) in den Durchlass (29) zwischen den Führungsplatten (16, 17) eingeführt wird, **dadurch gekennzeichnet, dass** die Imprägniereinheit (4) aus wenigstens zwei parallel angeordneten Teileinheiten (11, 12) gebildet ist, die seitlich aneinander gekoppelt sind, und jeweils einen spaltförmigen Einlauf (27) und einen Auslauf (28) für jeweils eine definierte Anzahl von Faserbündeln (32) enthalten, wobei die Durchlässe (29) jeweils einen Einlass (26) für Polymerschmelze aufweisen.

2. Einrichtung nach Anspruch 1, **dadurch gekennzeichnet, dass** der jeweilige spaltförmige Einlauf (27) in Laufrichtung der Faserbündel einen Bereich (35) reduzierter Spalthöhe aufweist, der übergangslos in den jeweiligen Durchlass zwischen den Führungsplatten (16, 17) übergeht, und dass die Durchlasshöhe zwischen den Führungsplatten (16, 17) im Bereich des Einlasses der Polymerschmelze gegenüber dem Bereich reduzierter Spalthöhe vergrößert ist.

3. Einrichtung nach Anspruch 2, **dadurch gekennzeichnet, dass** der Bereich reduzierter Spalthöhe durch Erhöhung der Zugkraft auf die Faserbündel eine Ablenkung der Faserbündel aus ihrer Laufrichtung in dem Durchlass (29) bewirkt.

4. Einrichtung nach Anspruch 2, **dadurch gekennzeichnet, dass** der Einlass (26) sich im Bereich des ersten Wellenbergs bzw. -tals der Führungsplatten (16, 17) zwischen einem Tal und einem Berg der Wellen der Führungsplatten (16, 17) befindet.

5. Einrichtung nach Anspruch 2, **dadurch gekennzeichnet, dass** der Polymerauslass (33) eine Kanalverengung vor dem Auslass (33) aufweist, über den eine Ablenkung der Polymerschmelze in Laufrichtung der Faserbündel erfolgt.

6. Einrichtung nach Anspruch 1, **dadurch gekennzeichnet, dass** die Teileinheiten (11, 12) an ihrem Auslauf (28) jeweils eine Düsenplatte (18) enthalten, durch die die mit Polymerschmelze durchtränkten Faserbündel im Durchmesser kalibriert werden.

7. Einrichtung nach Anspruch 1, **dadurch gekennzeichnet, dass** die Teileinheiten (11, 12) mehrteilig mit Seitenteilen (13, 14), einer Frontplatte (15) und einem die Führungsplatten (16, 17) aufweisenden Hauptteil (19) gebildet sind, wobei der Einlauf (27) der Faserbündel zwischen der Oberseite der Frontplatte (15) und einem vorderseitigen Bereich der oberen Führungsplatte (16) ausgebildet ist.

8. Einrichtung nach Anspruch 7, **dadurch gekennzeichnet, dass** die Frontplatte (15) an das Hauptteil (19) angeflanscht ist und dass ein Zufuhrkanal (21) zum jeweiligen Einlass (26) von Polymerschmelze zwischen der Stirnseite des Hauptteils (19) und der Frontplatte (15) ausgebildet ist.

9. Einrichtung nach Anspruch 8, **dadurch gekennzeichnet, dass** der Zufuhrkanal (21) zur Zuführung von Polymerschmelze einen Verteilerbereich (20) aufweist, in dem die Polymerschmelze zu einem über die gesamte Breite der Imprägniereinheit (4) oder der Teileinheiten (11, 12) verlaufenden Schmelzeband verbreitert wird, das dem Einlass (26) zwischen den Führungsplatten (16, 17) zugeführt wird.

10. Einrichtung nach Anspruch 1, **dadurch gekennzeichnet, dass** die Zahl der durch jede Teileinheit (11, 12) geführten Faserbündel zwischen 3 und 70, vorzugsweise 10 und 30 beträgt.

11. Verfahren zum Imprägnieren von Faserbündeln mit einer Polymerschmelze durch die Verwendung der Einrichtung der Ansprüche 1 bis 10, bei dem breit gefächerte Faserbündel (32) durch zwei mit Abstand zueinander angeordnete Führungsplatten (16, 17) mit wellenförmiger Oberfläche einer Imprägniereinheit (4) hindurchgeführt werden, wobei die Polymerschmelze in den Einlaufbereich der Führungsplatten (16, 17) eingeführt wird und die Faserbündel bei ihrem Durchlauf durch die Imprägniereinheit (4) von der Polymerschmelze durchtränkt werden, wobei die Faserbündel vor ihrem Einlauf in die Imprägniereinheit (4) in wenigstens zwei Faserbündelgruppen aufgeteilt werden, die jeweils in Teileinheiten (11, 12) der Imprägniereinheit (4) eingeführt und jeweils von den Teileinheiten (11, 12) getrennt zugeführter Polymerschmelze durchtränkt werden.

12. Verfahren nach Anspruch 11, **dadurch gekennzeichnet, dass** die Zugspannungen und Durchlaufgeschwindigkeiten der Faserbündel der einzelnen Fasergruppenbündel und oder die Temperaturen und Drücke der Polymerschmelzen für jede Teileinheit (11, 12) getrennt Steuer- und regelbar sind.

13. Verfahren nach Anspruch 11, **dadurch gekennzeichnet, dass** den Teileinheiten (11, 12) Polymerschmelzen unterschiedlichen Materials zugeführt werden.

14. Verfahren nach Anspruch 11, **dadurch gekennzeichnet, dass** die Führungsplatten (16, 17) der Imprägniereinheit (4) bewegbar sind.

15. Verfahren nach Anspruch 14, **dadurch gekennzeichnet, dass** wenigstens eine der Führungsplatten (16, 17) mit einer schwingenden Bewegung beaufschlagt wird.

## Claims

1. Device for impregnating strand-like fiber bundles (32) with a polymer melt, in which device a plurality of fiber bundles (32), which are inserted in parallel with one another into a slot-like infeed (27) of an impregnation unit (4), are guided through between two guide plates (16, 17), which have undulating surfaces (22, 23), and are arranged so as to be complementary to one another at a defined spacing, and are discharged from the impregnation unit (4) via their outlet (28), the fiber bundles (32) being saturated with the polymer melt while passing through the impregnation unit (4), which polymer melt following the slot-like infeed (27) is introduced between the guide plates (16, 17) into the passage (29), **characterized in that** the impregnation unit (4) is formed from at least two sub-units (11, 12) arranged in parallel, which are coupled laterally to each other, and in each case contain a slot-like infeed (27) and an outlet (28) for a defined number of fiber bundles (32) in each case, the passages (29) each comprising an inlet (26) for polymer melt.

2. Device according to claim 1, **characterized in that** the respective slot-like infeed (27) in the direction of travel of the fiber bundles has a region (35) of reduced slot height which makes a seamless transition into the respective passage between the guide plates (16, 17), and **in that** the passage height between the guide plates (16, 17) in the region of the inlet of the polymer melt is increased compared with the region of reduced slot height.

3. Device according to claim 2, **characterized in that** the region of reduced slot height causes the fiber bundles to be deflected out of their direction of travel in the passage (29) by increasing the tensile force on the fiber bundles.

4. Device according to claim 2, **characterized in that** the inlet (26) is located in the region of the first undulation peak or trough of the guide plates (16, 17) between a trough and a peak of the undulations of the guide plates (16, 17).

5. Device according to claim 2, **characterized in that** the polymer outlet (33) has a channel constriction in front of the outlet (33), via which deflection of the polymer melt in the direction of travel of the fiber bundles takes place.

6. Device according to claim 1, **characterized in that** the sub-units (11, 12) contain at their outlet (28) in each case a nozzle plate (18) by which the fiber bundles which are saturated with polymer melt are calibrated in diameter.

7. Device according to claim 1, **characterized in that** the sub-units (11, 12) are formed in multiple parts with side parts (13, 14), a front plate (15) and a main part (19) comprising the guide plates (16, 17), the infeed (27) of the fiber bundles being formed between the upper side of the front plate (15) and a front region of the upper guide plate (16).

8. Device according to claim 7, **characterized in that** the front plate (15) is flanged to the main part (19), and **in that** a feed channel (21) to the respective inlet (26) of polymer melt is formed between the end face of the main part (19) and the front plate (15).

9. Device according to claim 8, **characterized in that** the feed channel (21) for supplying polymer melt comprises a distributor region (20) in which the polymer melt is widened to a melt ribbon running across the full width of the impregnation unit (4) or of the sub-units (11, 12), which melt ribbon is supplied to the inlet (26) between the guide plates (16, 17).

10. Device according to claim 1, **characterized in that** the number of fiber bundles guided through each sub-unit (11, 12) is between 3 and 70, preferably 10 and 30.

11. Method for impregnating fiber bundles with a polymer melt by using the device of claims 1 to 10, in which widely fanned-out fiber bundles (32) are guided through two guide plates (16, 17), arranged at a spacing from each other, which have undulating surfaces, to an impregnation unit (4), wherein the polymer melt is introduced into the infeed region of the guide plates (16, 17), and the fiber bundles while passing through the impregnation unit (4) are saturated by the polymer melt, wherein the fiber bundles prior to entering the impregnation unit (4) are divided into at least two fiber bundle groups which are introduced into sub-units (11, 12) of the impregnation unit (4) in each case and in each case are saturated by polymer melt supplied separately to the sub-units (11, 12).

12. Method according to claim 11, **characterized in that** the tensile stresses and throughput rates of the fiber bundles of the individual fiber group bundles and/or the temperatures and pressures of the polymer melts can be controlled and regulated separately for each sub-unit (11, 12).

13. Method according to claim 11, **characterized in that** polymer melts of different material are supplied to the sub-units (11, 12).

14. Method according to claim 11, **characterized in that** the guide plates (16, 17) of the impregnation unit (4) are movable.

15. Method according to claim 14, **characterized in that** at least one of the guide plates (16, 17) is subjected to an oscillating movement.

## Revendications

1. Dispositif pour l'imprégnation de faisceaux de fibres en forme de nappes (32) avec un polymère fondu, avec lequel plusieurs faisceaux de fibres (32) introduits parallèlement les uns aux autres dans une entrée en forme de fente (27) d'une unité d'imprégnation (4) sont guidés entre deux plaques de guidage (16, 17) disposées de manière complémentaire avec un écartement défini et dotées de surfaces ondulées (22, 23) et sortent de l'unité d'imprégnation (4) par la sortie (28) de celles-ci, dans lequel les faisceaux de fibres (32) sont imbibés pendant leur déplacement à travers l'unité d'imprégnation (4) avec le polymère fondu qui est introduit à la suite de l'entrée en forme de fente (27) dans le passage (29) entre les plaques de guidage (16, 17), **caractérisé en ce que** l'unité d'imprégnation (4) est formée d'au moins deux unités partielles (11, 12) disposées parallèlement qui sont couplées latéralement l'une à l'autre, et contiennent respectivement une entrée en forme de fente (27) et une sortie (28) pour un nombre défini respectivement de faisceaux de fibres (32), dans lequel les passages (29) comportent respectivement une entrée (26) pour le polymère fondu.

2. Dispositif selon la revendication 1, **caractérisé en ce que** l'entrée respective en forme de fente (27) comporte dans la direction de déplacement des faisceaux de fibres (32) une zone (35) à hauteur de fente réduite qui se prolonge sans transition au/par le passage respectif entre les plaques de guidage (16, 17), et **en ce que** la hauteur de passage entre les plaques de guidage (16, 17) augmente dans la zone de l'entrée du polymère fondu par rapport à la zone à hauteur de fente réduite.

3. Dispositif selon la revendication 2, **caractérisé en ce que** la zone à hauteur de fente réduite provoque sur les faisceaux de fibres, par l'augmentation de la force de traction, une déviation de ceux-ci de leur direction de déplacement dans le passage (29).

4. Dispositif selon la revendication 2, **caractérisé en ce que** l'entrée (26) se trouve dans la zone du premier sommet ou creux d'ondulation des plaques de guidage (16, 17) entre un creux et un sommet des ondulations des plaques de guidage (16, 17).

5. Dispositif selon la revendication 2, **caractérisé en ce que** la sortie de polymère (33) comporte un rétrécissement de canal avant la sortie (33) par laquelle une déviation du polymère fondu se produit dans la direction de déplacement des faisceaux de fibres.

6. Dispositif selon la revendication 1, **caractérisé en ce que** les unités partielles (11, 12) contiennent respectivement à leur sortie (28) une plaque de filière (18) par laquelle les faisceaux de fibres imbibés de polymère fondu sont calibrés en diamètre.

7. Dispositif selon la revendication 1, **caractérisé en ce que** les unités partielles (11, 12) sont formées en plusieurs parties avec des parties latérales (13, 14), une plaque avant (15) et une partie principale (19) comportant les plaques de guidage (16, 17), dans lequel l'entrée (27) des faisceaux de fibres est formée entre le côté supérieur de la plaque avant (15) et une zone avant de la plaque de guidage supérieure (16).

8. Dispositif selon la revendication 7, **caractérisé en ce que** la plaque avant (15) est bridée à la partie principale (19) et **en ce qu'**un canal d'amenée (21) pour l'entrée respective (26) de polymère fondu est formé entre le côté frontal de la partie principale (19) et la plaque avant (15).

9. Dispositif selon la revendication 8, **caractérisé en ce que** le canal d'amenée (21) pour l'amenée de polymère fondu comporte une zone de distribution (20) dans laquelle le polymère fondu est élargi en une bande fondue, s'étendant sur toute la largeur de l'unité d'imprégnation (4) ou des unités partielles (11, 12), qui est amenée à l'entrée (26) entre les plaques de guidage (16, 17).

10. Dispositif selon la revendication 1, **caractérisé en ce que** le nombre des faisceaux de fibres guidés par chaque unité partielle (11, 12) est entre 3 et 70, de préférence 10 et 30.

11. Procédé pour l'imprégnation de faisceaux de fibres avec un polymère fondu par l'utilisation du dispositif des revendications 1 à 10, selon lequel des faisceaux de fibres (32) largement étalés sont guidés à travers des plaques de guidage (16, 17), disposées avec un écartement et dotées d'une surface ondulée, d'une unité d'imprégnation (4), dans lequel le polymère fondu est introduit dans la zone d'entrée des plaques de guidage (16, 17) et les faisceaux de fibres sont imbibés lors de leur passage à travers l'unité d'imprégnation (4) avec le polymère fondu, dans lequel les faisceaux de fibres, avant leur entrée dans l'unité d'imprégnation (4), sont divisés en au moins deux groupes de faisceaux de fibres qui sont introduits respectivement dans des unités partielles (11, 12) de l'unité d'imprégnation (4) et sont imbibés respectivement par les unités d'imprégnation (4) avec du polymère fondu amené séparément.

12. Procédé selon la revendication 11, **caractérisé en ce que** les contraintes de traction et les vitesses de déplacement des faisceaux de fibres des faisceaux individuels de groupes de fibres et ou les températures et pressions des polymères fondus sont aptes à être commandées et régulées séparément pour chaque unité partielle (11, 12).

13. Procédé selon la revendication 11, **caractérisé en ce que** des polymères fondus de matériaux différents sont amenés dans les unités partielles (11, 12).

14. Procédé selon la revendication 11, **caractérisé en ce que** les plaques de guidage (16, 17) de l'unité d'imprégnation (4) sont mobiles.

15. Procédé selon la revendication 14, **caractérisé en ce que** l'une au moins des plaques de guidage (16, 17) est soumise à un mouvement vibrant.
